# EUROPEAN PATENT APPLICATION

(11) **EP 4 665 057 A1**
(43) Date of publication of application: **17.12.2025**
(21) Application number: 23920557.8
(22) Date of filing: 10.02.2023
(51) Int. Cl.: H04W 72/30

(54) **COMMUNICATION CONTROL METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN)
(74) Representative: Stöckeler, Ferdinand
(86) International application number: PCT/CN2023/075544
(87) International publication number: WO 2024/164350

(57) **Abstract**

The present disclosure relates to the technical field of mobile communications. Provided are a communication control method and apparatus, a communication device, and a storage medium. The method comprises: by means of first resource blocks (RBs) matched with a system bandwidth and/or a channel bandwidth, a network device sends a first synchronization signal/PBCH block (SSB) to user equipment (UE), the first SSB at least comprising a physical broadcast channel (PBCH), the number of first RBs being less than the number of second RBs, and the second RBs being time-frequency resources for transmitting a second SSB. The present disclosure provides an SSB/PBCH transmission mode to match the system bandwidth and/or channel bandwidth of a dedicated spectrum, as well to ensure the transmission performance of PBCHs.

## Description

### TECHNICAL FIELD

The disclosure relates to the field of mobile communication technology, and in particular to a communication control method and a communication control apparatus, a communication device, and a storage medium.

### BACKGROUND

Research in R18 may support the new radio (NR) technology in some dedicated spectrums (n8, n26, n28, and n100) of long term evolution (LTE)/ global system for mobile communications - railway (GSM-R). The dedicated spectrums mainly provide communication services for dedicated services such as power systems/railway systems and public protection and disaster relief in some countries and regions. However, in existing NR systems, a physical broadcast channel (PBCH) occupies 20 resource blocks (RBs) for transmission. For communication systems with a system bandwidth or a channel bandwidth less than 5 MHz, such as 3 MHz (with 15 available RBs) and private network systems of 2.8 MHz~3.6 MHz, no relevant solution exists for synchronization signal/PBCH block (SSB) transmission.

### SUMMARY

The disclosure provides a communication control method and a communication control apparatus, a communication device, and a storage medium, aiming to provide a physical broadcast channel (PBCH) transmission method to match a system bandwidth and/or a channel bandwidth less than 5 MHz, while ensuring transmission performance of the PBCH.

Embodiments of a first aspect of the disclosure provide a communication control method. The method is performed by a network device, including: sending a first synchronization signal/PBCH block (SSB) to a user equipment (UE) through at least one first resource block (RB) matching a system bandwidth and/or a channel bandwidth, the first SSB at least including a PBCH, in which a quantity of the first RBs is less than a quantity of second RBs, the second RB are time-frequency resources for transmitting a second SSB.

In some embodiments of the disclosure, the method further includes: determining a first subcarrier index of the first RB where the first SSB is located, in which the first subcarrier index is an offset relative to a subcarrier 0 in the first RB.

In some embodiments of the disclosure, the method further includes: performing a rate matching based on the second RB, and determining a length of coded bits matching the second RB; and modulating the coded bits matching the second RBs; and performing resource mapping on the modulated symbol data based on the second RBs, to determine a transmission position of symbol data matching the second RBs.

In some embodiments of the disclosure, sending the first SSB to the UE through the first RB matching the system bandwidth and/or the channel bandwidth includes: selecting a transmission position of symbols corresponding to the quantity of first RBs at an SSB center frequency point from a transmission position of symbols matching the second RBs, to send the first SSB to the UE.

In some embodiments of the disclosure, sending the first SSB to the UE through the first RB matching the system bandwidth and/or the channel bandwidth includes: retaining symbol data carried on each subcarrier of the first RB at the SSB center frequency point, and setting symbol data beyond each subcarrier of the first RB to zero; and performing orthogonal frequency division multiplexing (OFDM) modulation based on the first subcarrier index of the first RB at the SSB center frequency point and corresponding symbol data, to send the first SSB to the UE.

In some embodiments of the disclosure, sending the first SSB to the UE through the first RB matching the system bandwidth and/or the channel bandwidth includes: determining a second subcarrier indexes of the second RBs at the SSB center frequency point; replacing the second subcarrier indexes with the first subcarrier index; and performing OFDM modulation based on the first subcarrier index of the first RB at the SSB center frequency point and corresponding symbol data, to send the first SSB to the UE.

In some embodiments of the disclosure, after performing the resource mapping on the modulated symbol data based on the second RBs, and determining the transmission position of the symbol data matching the second RBs, the method further includes: remapping the symbol data matching the second RBs to the first RB.

In some embodiments of the disclosure, remapping the symbol data matching the second RBs to the first RB includes: for at least two different PBCH transmissions, remapping the symbol data matching the second RBs to the first RB using different PBCH resource remapping patterns.

In some embodiments of the disclosure, the method further includes: configuring pattern-related information of the different PBCH resource remapping patterns used for the at least two different PBCH transmissions for the UE.

In some embodiments of the disclosure, sending the first SSB to the UE through the first RB matching the system bandwidth and/or the channel bandwidth includes: retaining symbol data carried on each subcarrier of the remapped first RB at the SSB center frequency point, and setting symbol data beyond each subcarrier of the remapped first RB to zero; and performing OFDM modulation according to the first subcarrier index of the first RB at the SSB center frequency point and corresponding symbol data, to send the first SSB to the UE.

In some embodiments of the disclosure, sending the first SSB to the UE through the first RB matching the system bandwidth and/or the channel bandwidth includes: determining second subcarrier indexes of the second RBs at the SSB center frequency point; replacing the second subcarrier index with the first subcarrier index; and performing OFDM modulation based on the first subcarrier index of the first RB at the SSB center frequency point and corresponding remapped symbol data, to send the first SSB to the UE.

In some embodiments of the disclosure, the method further includes: performing rate matching based on the first RB, to determine a length of coded bits matching the first RB; modulating the coded bit matching the first RB; and performing resource mapping on modulated symbol data based on the first RB and the first subcarrier index to determine a transmission position of the symbol data matching the first RB.

In some embodiments of the disclosure, performing the rate matching based on the first RB includes: for at least two different PBCH transmissions, performing the rate matching using the same coded bit start position.

In some embodiments of the disclosure, performing the rate matching based on the first RB includes: for at least two different PBCH transmissions, performing the rate matching using different coded bit start positions, in which the different coded bit start positions for performing the rate matching depend on a length of coded bits matching the system bandwidth and/or channel bandwidth.

In some embodiments of the disclosure, the method further includes: for the at least two different PBCH transmissions, sending a configuration signaling of the coded bit start position used for the rate matching of the PBCH transmission to the UE.

In some embodiments of the disclosure, the at least two different PBCH transmissions include: PBCH transmissions corresponding to any two or more SSB indexes within an SSB set in the same SSB period; or PBCH transmissions corresponding to the same SSB index in at least two different SSB periods.

In some embodiments of the disclosure, the method further includes: determining the first RB, in which the quantity of the at least one first RB is equal to or less than a quantity of RBs corresponding to maximum time-frequency resources supported by the system bandwidth and/or channel bandwidth.

Embodiments of a second aspect of the disclosure provide a communication control method. The method is performed by a network device, including: receiving at least on first SSB matching a system bandwidth and/or a channel bandwidth sent by a network device, the first SSB at least including a PBCH, in which a quantity of the first RBs is less than a quantity of second RBs, the second RB are time-frequency resources for transmitting a second SSB.

In some embodiments of the disclosure, the method further includes: performing OFDM demodulation on the PBCH; determining a RE index reordering manner of the first SSB based on a protocol agreement; and determining, based on an RE index position of a second SSB and the RE index reordering manner, a transmission position of symbol data where an OFDM demodulation symbol is located and which matches the second RB.

In some embodiments of the disclosure, the method further includes: performing resource de-mapping and rate de-matching based on the second RB.

In some embodiments of the disclosure, the method further includes: performing resource de-mapping and rate de-matching based on the first RB.

In some embodiments of the disclosure, the method further includes: performing separate decoding or combined decoding for at least two different PBCH transmissions.

In some embodiments of the disclosure, performing the combined decoding for the at least two different PBCH transmissions includes: for the at least two different PBCH transmissions using different PBCH resource remapping patterns, performing the combined decoding in a preset pattern order and/or a preset coded bit start position cyclic order in an initial access state.

In some embodiments of the disclosure, performing the combined decoding for the at least two different PBCH transmissions includes: for the at least two different PBCH transmissions using different PBCH resource remapping patterns, performing the combined decoding based on pattern-related information agreed by a protocol or configured by a network device and/or a coded bit start position cyclic order agreed by the protocol or configured by the network device in a non-initial access state.

In some embodiments of the disclosure, the method further includes: receiving pattern-related information of different PBCH resource remapping patterns and/or different coded bit start position cyclic orders used for the at least two different PBCH transmissions sent by the network device.

In some embodiments of the disclosure, the method further includes: determining a PBCH resource remapping pattern used for each PBCH transmission based on the pattern-related information and a downlink timing.

In some embodiments of the disclosure, the method further includes: determining a coded bit start position used for each rate matching of PBCH based on the coded bit start position cyclic order and a downlink timing.

In some embodiments of the disclosure, the at least two different PBCH transmissions include: PBCH transmissions corresponding to any two or more SSB indexes in an SSB set during the same SSB period; or PBCH transmissions corresponding to the same SSB index during at least two different SSB periods.

In some embodiments of the disclosure, before performing the resource de-mapping and rate de-matching based on the second RB, the method further includes: performing resource de-remapping on symbol data on the first RB.

Embodiments of a third aspect of the disclosure provide a communication control apparatus. The apparatus is configured in a network device, including a transceiver module, in which the transceiver module is configured to: send the first SSB to a UE through at least one RB matching a system bandwidth and/or a channel bandwidth, the first SSB at least including a PBCH, in which a quantity of the first RBs is less than a quantity of second RBs, the second RB are time-frequency resources for transmitting a second SSB.

Embodiments of a fourth aspect of the disclosure provide a communication control apparatus. The apparatus is configured in a UE, including a transceiver module, in which the transceiver module is configured to: receive the first SSB matching a system bandwidth and/or a channel bandwidth sent by a network device, the first SSB at least including a PBCH, in which a quantity of the first RBs is less than a quantity of second RBs, the second RB are time-frequency resources for transmitting a second SSB.

Embodiments of a fifth aspect of the disclosure provide a communication device. The communication device includes: a transceiver; a memory; a processor connected to the transceiver and the memory, configured to control wireless signal transmission and reception of the transceiver by executing computer-executable instructions stored in the memory, and implement the method according to the first aspect or the method according to the second aspect.

Embodiments of a sixth aspect of the disclosure provide a computer storage medium. The computer storage medium stores computer-executable instructions which, when executed by a processor, implement the method according to the first aspect or the method according to the second aspect.

Embodiments of a seventh aspect of the disclosure provide a communication device. The communication system includes: a network device and a UE, in which, the network device is configured to perform the method according to the first aspect; and the UE is configured to perform the method according to the second aspect.

According to the communication control method in the disclosure, the network device sends the first SSB to the UE through at least one RB matching the system bandwidth and/or the channel bandwidth. The first SSB at least includes the PBCH, in which the number of the first RBs is less than the number of second RBs, and the second RB is the time-frequency resource for transmitting the second SSB. This provides an SSB/PBCH transmission method to match a system bandwidth and/or a channel bandwidth of dedicated spectrums, while ensuring transmission performance of the PBCH.

Additional aspects and advantages of the present invention will be set forth in part in the description which follows, and in part will be obvious from the description, or will be learned by practice of the present invention.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a flow chart illustrating a communication control method according to an embodiment of the disclosure.
FIG. 2 is a flow chart illustrating a communication control method according to an embodiment of the disclosure.
FIG. 3 is a schematic diagram illustrating a method for selecting a resource block (RB) matching a system bandwidth at a synchronization signal/physical broadcast channel (PBCH) block (SSB) center frequency point according to an embodiment of the disclosure.
FIG. 4 is a flow chart illustrating a communication control method according to an embodiment of the disclosure.
FIG. 5 is a schematic diagram illustrating a resource remapping pattern according to an embodiment of the disclosure.
FIG. 6 is a flow chart illustrating a communication control method according to an embodiment of the disclosure.
FIG. 7 is a flow chart illustrating a communication control method according to an embodiment of the disclosure.
FIG. 8 is a flow chart illustrating a communication control method according to an embodiment of the disclosure.
FIG. 9 is a flow chart illustrating a communication control method according to an embodiment of the disclosure.
FIG. 10 is an interaction diagram illustrating a communication control method according to an embodiment of the disclosure.
FIG. 11 is a block diagram illustrating a communication control apparatus according to an embodiment of the disclosure.
FIG. 12 is a block diagram illustrating a communication control apparatus according to an embodiment of the disclosure.
FIG. 13 is a block diagram illustrating a communication control apparatus according to an embodiment of the disclosure.
FIG. 14 is a block diagram illustrating a communication control apparatus according to an embodiment of the disclosure.
FIG. 15 is a block diagram illustrating a communication device according to an embodiment of the disclosure.
FIG. 16 is a block diagram illustrating a chip according to an embodiment of the disclosure.

### DETAILED DESCRIPTION

Embodiments of the disclosure are described in detail below, and examples of the embodiments are illustrated in the accompanying figures, in which the same or similar symbols from beginning to end indicate the same or similar components or components with the same or similar functions. The embodiments described below by reference to the accompanying figures are exemplary and are intended to be used to explain the disclosure and are not to be construed as a limitation of the disclosure.

Research in R18 may support the new radio (NR) technology in some dedicated spectrums (n8, n26, n28, and n100) of long term evolution (LTE)/ global system for mobile communications - railway (GSM-R). The dedicated spectrums mainly provide communication services for dedicated services such as power systems/railway systems and public protection and disaster relief in some countries and regions. The spectrums support only 15 kHz subcarrier spacing, and supported system bandwidths include 5 MHz and 3 MHz. According to regulations of NR and LTE for radio frequency (RF) channel bandwidth, for 5 MHz, the number of available resource blocks (RBs) is 25; according to regulations of LTE for RF channel bandwidth, for 3 MHz, the number of available RBs is 15.

However, in existing NR systems, a physical broadcast channel (PBCH) occupies 20 RBs for transmission. For private network systems of 3 MHz (with 15 RBs) and 2.8 MHz to 3.6 MHz, there is a lack of definition related to the PBCH transmission. One possible way is that the PBCH still occupies 20 RBs, and a base station/terminal performs transmission/reception of partial RBs, which may cause loss of PBCH transmission performance. Thus, for dedicated systems of 3 MHz and 2.8 MHz to 3.6 MHz, it is necessary to consider how to perform the PBCH transmission and how to improve transmission performance of the PBCH.

In this case, the disclosure provides a method and a communication control apparatus, a communication device, and a storage medium, aiming to provide a PBCH transmission method to match a system bandwidth and/or a channel bandwidth less than 5 MHz, while ensuring transmission performance of the PBCH.

It may be understood that the solution provided in the disclosure may be applied to satellite access networks, particularly applied to communication scenarios where a UE accesses a core network via a satellite access network, including but not limited to 5G core networks and core networks supporting subsequent communication technologies, such as LTE, fifth-generation mobile communication technology (5G)-advanced, and sixth-generation mobile communication technology (6G), which is not limited in the disclosure.

The UE described in the disclosure includes but is not limited to smart terminal devices, cellular phones, wireless devices, handheld devices, mobile units, vehicles, in-vehicle devices, etc., which is not limited in the disclosure.

The solution provided in the disclosure is described in detail below with reference to the accompanying figures.

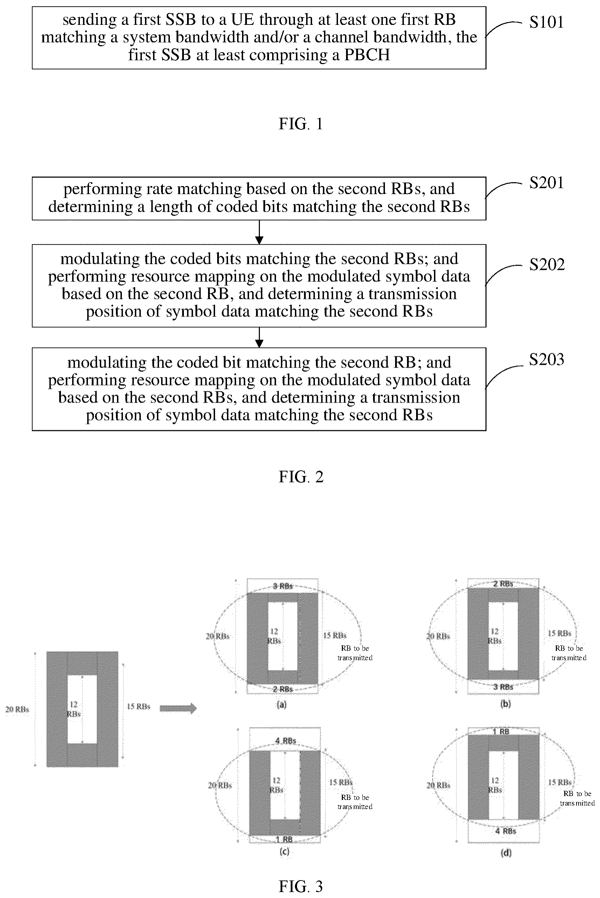

FIG. 1 is a flow chart illustrating a communication control method according to an embodiment of the disclosure. The method is performed by a network device.

The network device in the embodiments of the disclosure is an entity on the network side for transmitting or receiving signals. For example, the network device may be an evolved NodeB (eNB), a transmission reception point (TRP), a next generation NodeB (gNB) in an NR system, a base station in other future mobile communication systems, or an access node in a wireless fidelity (WiFi) system. The embodiments of the disclosure impose no limitation on specific technologies or device forms adopted by the network device. The network device provided in the embodiments of the disclosure may consist of a central unit (CU) and a distributed unit (DU), where the CU may also be called a control unit. Adopting a CU-DU structure may split protocol layers of the network device, for example, a base station, with functions of some protocol layers placed under centralized control of the CU, and functions of the remaining or all protocol layers distributed in the DU under centralized control of the CU.

As shown in FIG. 1, the method may include the following step S101.

At S101, a first synchronization signal/PBCH block (SSB) is sent to a UE through at least one first RB matching a system bandwidth and/or a channel bandwidth, the first SSB at least including a PBCH.

A quantity of the first RBs is less than a quantity of second RBs, and the second RB are time-frequency resources for transmitting a second SSB.

In the embodiments of the disclosure, the system bandwidth and/or the channel bandwidth may also be available bandwidth resources, which is not limited in the disclosure.

In embodiments of the disclosure, the second RB is used to transmit the second SSB, which is consistent with current protocols. For example, the number of the second RBs is 20. The first RB is used to transmit the first SSB, which matches the system bandwidth and/or the channel bandwidth. For example, the number of the first RBs is 15, and the number of the first RBs is less than the number of the second RBs, that is, the time-frequency resources supported by the system bandwidth or the channel bandwidth in the disclosure are lower than the time-frequency resources for the SSB transmission supported by current NR protocols. The disclosure takes the regulation in the LTE that 15 RBs are available for a system bandwidth or a channel bandwidth of 3 MHz as an example for description. It should be understood that the correspondence between the 3 MHz system bandwidth or the 3 MHz channel bandwidth and the number of matched RBs exemplified in the disclosure is not limited here. Other correspondences permitted or implementable by protocols are included within the scope of the disclosure. Similarly, for the number of RBs matching private network systems of 2.8 MHz to 3.6 MHz, no specific limitation is imposed in the disclosure, and the number of RBs determined according to actual needs shall prevail.

It should be noted that in existing NR systems, an SSB occupies 20 RBs in the frequency domain, in which the PBCH occupies 20 RBs in the frequency domain, and a primary synchronization signal (PSS) and a secondary synchronization signal (SSS) each occupy 127 resource elements (REs) in the frequency domain.

Further, the time-frequency resource of the second SSB is the time-frequency resource supporting the SSB transmission in existing NR protocols R15/16/17. The SSB transmission frequency-domain resource in existing NR protocols occupies 20 RBs, that is, the number of the second RBs is the number of RBs occupied by the second SSB in the frequency domain, or the number of RBs occupied by the PBCH in the second SSB in the frequency domain, i.e., 20 RBs.

In embodiments of the disclosure, the time-frequency resources supported by the system bandwidth or the channel bandwidth are lower than the time-frequency resources occupied by the SSB transmission supported by current NR protocols. For example, the system bandwidth or the channel bandwidth of some dedicated spectrums is 3 MHz and 2.8 MHz to 3.6 MHz, supporting a number of RBs less than 20.

Further, the time-frequency resource of the first SSB is a time-frequency resource matching the system bandwidth/channel bandwidth. For example, the first RB matches a system bandwidth of 3 MHz. According to LTE regulations for RF channel bandwidth, the number of available RBs for 3 MHz is 15, which does not support the SSB transmission in existing NR systems (occupying 20 RBs in the frequency domain). The number of the first RBs is the number of RBs occupied by the first SSB in the frequency domain, or the number of RBs occupied by the PBCH in the first SSB in the frequency domain, with a maximum of 15 RBs.

In summary, according to the communication control method provided in embodiments of the disclosure, the network device sends the first SSB to the UE using the first RB matching the system bandwidth and/or the channel bandwidth. The first SSB at least includes the PBCH, in which the number of the first RBs is less than the number of second RBs, and the second RB is the time-frequency resource for transmitting the second SSB. This provides an SSB transmission method to match a system bandwidth and/or a channel bandwidth of dedicated spectrums.

FIG. 2 is a flow chart illustrating a communication control method according to an embodiment of the disclosure. The method may be performed by a network device. Based on the embodiments shown in FIG. 1, as shown in FIG. 2, the method may include the following steps S201 to S203.

At S201, a rate matching is performed based on the second RBs, and a length of coded bits matching the second RBs is determined.

At S202, a modulation is performed on the coded bits matching the second RBs; and a resource mapping is performed on modulated symbol data based on the second RBs, to determine a transmission position of symbol data matching the second RBs.

It should be noted that in this embodiment, performing the rate matching, the modulation, and the resource mapping based on the second RB is content specified in existing protocols, to obtain the transmission position of symbol data matching the second RBs for subsequent determination of the transmission position of symbol data of the first RB.

That is, the network device still performs the rate matching, quadrature phase shift keying (QPSK) modulation, and the resource mapping based on time-frequency resources supporting the SSB transmission in existing NR protocols R15/16/17 (the SSB occupies 20 RBs in the frequency domain), or the network device still performs the rate matching, the QPSK modulation, and the resource mapping based on a time-frequency resource structure of the PBCH in a traditional SSB (the PBCH occupies 20 RBs in the frequency domain).

Specifically, the rate matching is performed based on the time-frequency resource structure of the SSB occupying 20 RBs or a time-frequency resource structure of the PBCH in the SSB, outputting a bit length of 864 bits. The QPSK modulation is performed on the 864 coded bits, and the resource mapping is performed on the modulated symbol data based on the time-frequency resource structure of the existing PBCH occupying 20 RBs, and the transmission position of the symbol data is determined.

In some embodiments, the method further includes: determining the first RB, in which the quantity of the at least one first RB is equal to or less than a quantity of RBs corresponding to maximum time-frequency resources supported by the system bandwidth and/or channel bandwidth.

It may be understood that to solve the problem of providing communication services for NR technology in some dedicated spectrums of LTE/GSM-R in existing protocol R18, the system bandwidth and/or the channel bandwidth in the disclosure includes a private network system bandwidth of 3 MHz and/or a private network system bandwidth of 2.8 MHz to 3.6 MHz, and the first RB may match the system bandwidth and/or the channel bandwidth of 3 MHz and/or 2.8 MHz to 3.6 MHz.

For example, the first RB matches the system bandwidth and/or the channel bandwidth of 3 MHz. The number of available RBs for the system bandwidth and/or the channel bandwidth of 3 MHz is 15, that is, the maximum time-frequency resources supported are 15, and the number of the first RBs is equal to or less than 15.

At S203, a transmission position of symbols corresponding to the quantity of first RBs at an SSB center frequency point is selected from transmission positions of symbols matching the second RBs, to send the first SSB to the UE.

That is, from the transmission position of symbols matching the time-frequency resources supporting the SSB/PBCH transmission in existing R15/16/17 NR protocols (5 MHz system bandwidth, the SSB occupies 20 RBs in the frequency domain), the transmission position of symbols matching a number of time-frequency resources matching the system bandwidth and/or the channel bandwidth (for example, a 3 MHz system bandwidth of a private network system, the SSB occupies 15 RBs in the frequency domain) at the SSB center frequency point is selected.

The SSB center frequency point refers to near a center frequency point of an SSB time-frequency resource structure in existing NR systems.

In some specific implementations, as shown in FIG. 3, the leftmost one is a time-frequency resource structure of the PBCH in existing NR, occupying 20 RBs in the frequency domain. The RBs matching a 3 MHz system bandwidth are selected, specifically 15 RBs near the center frequency point, discarding 5 edge RBs. This may include four selection methods as shown in (a), (b), (c), and (d) in FIG. 3. As shown in FIG. 3, the right side is the selected time-frequency resource structure of the PBCH matching a 3 MHz system bandwidth, occupying 15 RBs in the frequency domain.

In some embodiments of the disclosure, the method further includes: determining a first subcarrier index of the first RB where the first SSB is located, in which the first subcarrier index is an offset relative to a subcarrier 0 in the first RB.

That is, an index position of each subcarrier in the first RB where the first SSB is located is offset relative to a resource mapping table of an SSB structure in existing NR systems, with a reference point being the subcarrier 0 in the first RB. The resource mapping table of the SSB time-frequency structure in existing NR systems is shown in Table 1.

Table 1 shows specific time-frequency positions of signals or channels in the SSB of existing NR systems, where 1 denotes a time-domain symbol index (1 = 0, 1, 2, 3), and k denotes a frequency-domain RE index, that is, a subcarrier index (reference point being RE0 of RB0 in the SSB, namely subcarrier 0 in RB0 of the SSB, k = 0, 1, 2, ..., 239).

**Table 1: primary synchronization signal (PSS) resources, secondary synchronization signal (SSS) resources, PBCH resources, and DM-RS resources of the PBCH in an SS/PBCH block**

| channel or signal | time-domain symbol index (1), starting relative to an SS/PBCH block | Subcarrier index (k), starting relative to an SS/PBCH block |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, ..., 55, 183, 184, ...239 |
| PBCH | 1, 3 | 0, 1, ..., 239 |
| | 2 | 0, 1, ..., 47 |
| | | 192, 193, ..., 239 |
| DM-RS for PBCH | 1, 3 | 0+v, 4+v, 8+v, ..., 236+v |
| | 2 | 0+v, 4+v, 8+v, ..., 44+v |
| | | 192+v, 196+v, ..., 236+v |

In an implementation, RBs corresponding to the quantity of first RBs near the center frequency point are selected as the first RB, and a subcarrier index of the first RB is re-determined. The first subcarrier index of the first RB is equal to the subcarrier index of the second RB - an offset, or the subcarrier index of the first SSB is equal to the subcarrier index of the second SSB - an offset. The offset may be determined by, but not limited to, the following methods: offset = (20 - M)/2 * 12, or offset = ceil((20 - M)/2 * 12), or offset = floor((20 - M)/2 * 12), in which M is the actual number of RBs transmitted by the PBCH, that is, the number of the first RBs.

Step 203 further includes the following two optional implementations.

In some embodiments of the disclosure, symbol data carried on each subcarrier of the first RB at the SSB center frequency point is retained, and symbol data beyond each subcarrier of the first RB is set to zero; and orthogonal frequency division multiplexing (OFDM) modulation is performed based on the first subcarrier index of the first RB at the SSB center frequency point and corresponding symbol data, and the first SSB is sent to the UE.

In other embodiments, second subcarrier indexes of the second RBs at the SSB center frequency point are determined; the second subcarrier indexes are replaced with the first subcarrier index; and OFDM modulation is performed based on the first subcarrier index of the first RB at the SSB center frequency point and corresponding symbol data; and the first SSB is sent to the UE.

That is, when performing the OFDM modulation, original symbol data on RBs matching the system bandwidth is retained, and REs beyond the system bandwidth portion are set to zero. Alternatively, for the subcarrier index after the resource mapping based on the second RB in step 202, the subcarrier index at the SSB center frequency point is determined and replaced with the first subcarrier index; and the OFDM modulation is performed based on the first subcarrier index at the SSB center frequency point and the corresponding symbol data.

In summary, according to the communication control method provided in the embodiments of the disclosure, the rate matching is performed based on the second RB, and the length of the coded bits matching the second RBs is determined. The modulation is performed on the coded bits matching the second RBs; and the resource mapping is performed on the modulated symbol data based on the second RBs, and the transmission position of the symbol data matching the second RBs is determined. The transmission position of symbols corresponding to the quantity of first RBs at the SSB center frequency point is selected from the transmission position of the symbol matching the second RB; and the first SSB is sent to the UE. This provides an SSB/PBCH transmission method to match a system bandwidth and/or a channel bandwidth of dedicated spectrums, while ensuring transmission performance of the PBCH.

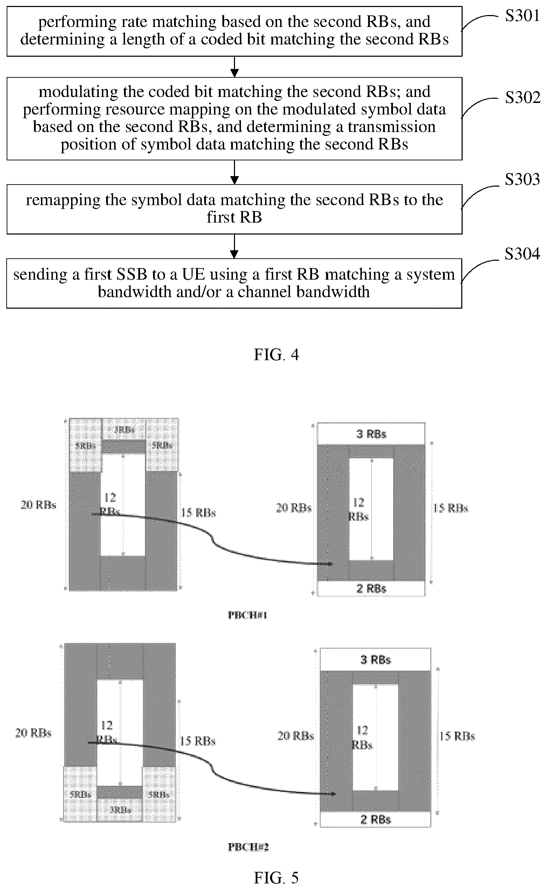

FIG. 4 is a flow chart illustrating a communication control method according to an embodiment of the disclosure. The method is performed by a network device. Based on the embodiments shown in FIG. 1 and FIG. 2, as shown in FIG. 4, the method may include the following steps S301 to S304.

At S301, a rate matching is performed based on second RBs, and a length of coded bits matching the second RBs is determined.

At S302, a modulation is performed on the coded bits matching the second RBs; and resource mapping is performed on modulated symbol data based on the second RBs, and a transmission position of symbol data matching the second RBs is determined.

It should be noted that in this embodiment, performing the rate matching, the modulation, and the resource mapping based on the second RB is content specified in existing protocols, to obtain the transmission position of symbol data matching the second RBs for subsequent determination of the transmission position of symbol data of the first RB.

That is, the network device still performs the rate matching, QPSK modulation, and the resource mapping based on time-frequency resources (20 RBs occupied by the SSB in the frequency domain) supporting the SSB transmission in existing NR protocols R15/16/17, or the network device still performs the rate matching, the QPSK modulation, and the resource mapping based on a time-frequency resource structure of the PBCH in a traditional SSB (the PBCH occupies 20 RBs in the frequency domain).

Specifically, the rate matching is performed based on the time-frequency resource structure of the SSB occupying 20 RBs or a time-frequency resource structure of the PBCH in the SSB, outputting a bit length of 864 bits. The QPSK modulation is performed on the 864 coded bits, and the resource mapping is performed on the modulated symbol data based on the time-frequency resource structure of the existing PBCH occupying 20 RBs, and the transmission position of the symbol data is determined.

In some embodiments, the method further includes: determining the first RB, in which the quantity of the at least one first RB is equal to or less than a quantity of RBs corresponding to maximum time-frequency resources supported by the system bandwidth and/or channel bandwidth.

It may be understood that to solve the problem of providing communication services for NR technology in some dedicated spectrums of LTE/GSM-R in existing protocol R18, the system bandwidth and/or the channel bandwidth in the disclosure includes a private network system bandwidth of 3 MHz and/or a private network system bandwidth of 2.8 MHz to 3.6 MHz, and the first RB may match the dedicated system bandwidth and/or the dedicated channel bandwidth of 3 MHz and/or 2.8 MHz to 3.6 MHz.

For example, the first RB matches the system bandwidth and/or the channel bandwidth of 3 MHz. The number of available RBs for the system bandwidth and/or the channel bandwidth of 3 MHz is 15, that is, the maximum time-frequency resources supported are 15, and the number of the first RBs is equal to or less than 15.

At S303, the symbol data matching the second RBs is remapped to the first RB.

It may be understood that since the number of the second RBs is greater than the number of the first RBs, remapping the symbol data matching the second RBs to the first RB requires selecting partial of the second RB. Compared with step S203, which selects RBs matching the system bandwidth and/or the terminal channel bandwidth at an SSB center frequency point, step S303 may remap the symbol data matching the second RBs to RBs matching the system bandwidth and/or the terminal channel bandwidth using different PBCH resource remapping patterns. The transmission position corresponding to the remapped symbols is at the SSB center frequency point.

As shown in FIG. 5, pattern#1 and pattern#2 are two different PBCH resource remapping patterns listed in the disclosure. For the pattern#1, the left side is symbol data matching the second RBs, partial RBs at the top are discarded, and the retained symbol data is remapped to the first RB at the SSB center frequency point, as shown on the right. For the pattern#2, the left side is symbol data matching the second RBs, partial RBs at the bottom are discarded, and the retained symbol data is remapped to the first RB at the SSB center frequency point, as shown on the right.

In some embodiments of the disclosure, for at least two different PBCH transmissions, the symbol data matching the second RBs is remapped to the first RB using different PBCH resource remapping patterns.

Further, the at least two different PBCH transmissions include: PBCH transmissions corresponding to any two or more SSB indexes within an SSB set in the same SSB period; or PBCH transmissions corresponding to the same SSB index in at least two different SSB periods.

For example, within 80 ms, the PBCH transmissions are repeated over 4 periods. Within the same period, the PBCH transmissions need to send 4 different SSB indexes. Different PBCH resource remapping patterns may be used for the PBCH transmissions corresponding to two or more SSB indexes within the same period. For example, the pattern#1 is used for the PBCH transmission corresponding to the first SSB index, the pattern#2 is used for the PBCH transmission corresponding to the second SSB index, and the pattern#1 and the pattern#2 are sequentially used for the PBCH transmissions corresponding to the remaining 2 SSB indexes. Alternatively, for the PBCH transmissions corresponding to the same SSB index in the at least two different SSB periods, for example, the pattern#1 is used for the PBCH transmission corresponding to the first SSB index in a first period, and the pattern#2 is used for the PBCH transmission corresponding to the first SSB index in a third period.

Further, the network device may cyclically perform the PBCH transmissions using two or more resource remapping patterns, for example, cycling in the order of pattern#1, pattern#2, pattern#1, pattern#2, and so on.

In some embodiments of the disclosure, the method further includes: configuring pattern-related information of the different PBCH resource remapping patterns used for the at least two different PBCH transmissions for the UE.

The at least two different PBCH transmissions include: PBCH transmissions corresponding to any two or more SSB indexes within an SSB set in the same SSB period; or PBCH transmissions corresponding to the same SSB index in at least two different SSB periods.

For example, the network device may configure or indicate the resource remapping pattern for the PBCH transmission of each SSB to the UE, such as indicating {pattern 2, pattern 1}, or indicating that the starting pattern is the pattern#2. This means that for different SSB transmissions within a fixed period, the first PBCH is remapped using the pattern#2, the second PBCH is remapped using the pattern#1, and so on.

At S304, the first SSB is sent to the UE using the first RB matching the system bandwidth and/or the channel bandwidth.

The quantity of the at least one first RB is equal to or less than a quantity of RBs corresponding to maximum time-frequency resources supported by the system bandwidth and/or channel bandwidth.

In some embodiments of the disclosure, the method further includes: determining a first subcarrier index of the first RB where the first SSB is located, in which the first subcarrier index is an offset relative to a subcarrier 0 in the first RB.

In an implementation, RBs corresponding to the quantity of first RBs near the center frequency point are selected as the first RB, and a subcarrier index of the first RB is re-determined. The first subcarrier index of the first RB is equal to the subcarrier index of the second RB - an offset, or the subcarrier index of the first SSB is equal to the subcarrier index of the second SSB - an offset. The offset may be determined by, but not limited to, the following methods: offset = (20 - M)/2 * 12, or offset = ceil((20 - M)/2 * 12), or offset = floor((20 - M)/2 * 12), in which M is the actual number of RBs transmitted by the PBCH, that is, the number of the first RBs.

In some embodiments of the disclosure, sending the first SSB to the UE through the first RB matching the system bandwidth and/or the channel bandwidth includes: retaining symbol data carried on each subcarrier of the remapped first RB at the SSB center frequency point, and setting symbol data beyond each subcarrier of the remapped first RB to zero; and performing OFDM modulation according to the first subcarrier index of the first RB at the SSB center frequency point and corresponding symbol data to send the first SSB to the UE.

In some embodiments of the disclosure, sending the first SSB to the UE through the first RB matching the system bandwidth and/or the channel bandwidth includes: determining second subcarrier indexes of the second RBs at the SSB center frequency point; replacing the second subcarrier index with the first subcarrier index; and performing OFDM modulation based on the first subcarrier index of the first RB at the SSB center frequency point and corresponding remapped symbol data; and sending the first SSB to the UE.

That is, when performing the OFDM modulation, original symbol data on RBs matching the system bandwidth is retained, and REs beyond the system bandwidth portion are set to zero; and the OFDM modulation is performed based on the first subcarrier index at the SSB center frequency point and the corresponding symbol data. Alternatively, for the subcarrier index after the resource mapping based on the second RB in step 302, the subcarrier index at the SSB center frequency point is determined and replaced with the first subcarrier index; and the OFDM modulation is performed based on the first subcarrier index at the SSB center frequency point and the corresponding remapped symbol data.

In summary, according to the communication control method provided in the embodiments of the disclosure, the rate matching is performed based on the second RB, and the length of the coded bits matching the second RBs is determined. The modulation is performed on the coded bits matching the second RBs; and the resource mapping is performed on the modulated symbol data based on the second RBs, and the transmission position of the symbol data matching the second RBs is determined. The symbol data matching the second RBs is remapped to the first RB. The first SSB is sent to the UE using the first RB matching the system bandwidth and/or the channel bandwidth. This provides an SSB/PBCH transmission method to match a system bandwidth and/or a channel bandwidth of dedicated spectrums, while ensuring transmission performance of the PBCH.

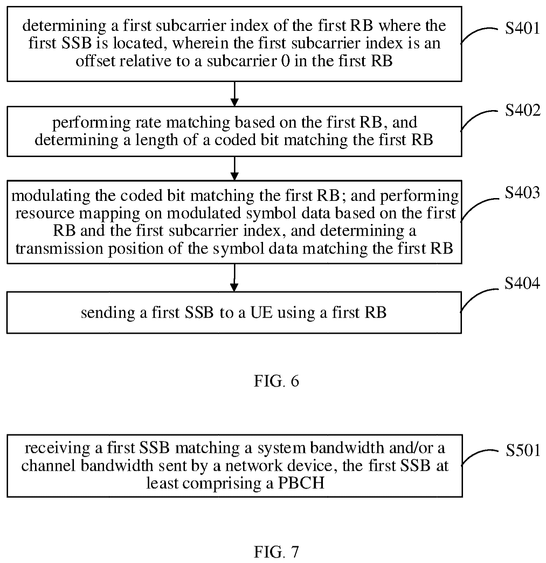

FIG. 6 is a flow chart illustrating a communication control method according to an embodiment of the disclosure. The method is performed by a network device. Based on the embodiments shown in FIG. 1, as shown in FIG. 6, the method may include the following steps S401 to S404.

At S401, a first subcarrier index of a first RB where a first SSB is located is determined, in which the first subcarrier index is an offset relative to a subcarrier 0 in the first RB.

That is, an index position of each subcarrier in the first RB where the first SSB is located is offset relative to a resource mapping table of an SSB structure in existing NR systems, with a reference point being the subcarrier 0 in the first RB. The resource mapping table of the SSB time-frequency structure in existing NR systems is shown in Table 1.

In an implementation, RBs corresponding to the quantity of first RBs near the center frequency point are selected as the first RB, and a subcarrier index of the first RB is re-determined. The first subcarrier index of the first RB is equal to the subcarrier index of the second RB - an offset, or the subcarrier index of the first SSB is equal to the subcarrier index of the second SSB - an offset. The offset may be determined by, but not limited to, the following methods: offset = (20 - M)/2 * 12, or offset = ceil((20 - M)/2 * 12), or offset = floor((20 - M)/2 * 12), in which M is the actual number of RBs transmitted by the PBCH, that is, the number of the first RBs.

In some embodiments of the disclosure, the method further includes: determining the first RB, in which the quantity of the at least one first RB is equal to or less than a quantity of RBs corresponding to maximum time-frequency resources supported by the system bandwidth and/or channel bandwidth.

It may be understood that to solve the problem of providing communication services for NR technology in some dedicated spectrums of LTE/GSM-R in existing protocol R18, the system bandwidth and/or the channel bandwidth in the disclosure includes a private network system bandwidth of 3 MHz and/or a private network system bandwidth of 2.8 MHz to 3.6 MHz, and the first RB may match the system bandwidth and/or the channel bandwidth of 3 MHz and/or 2.8 MHz to 3.6 MHz.

For example, the first RB matches the system bandwidth and/or the channel bandwidth of 3 MHz. The number of available RBs for the system bandwidth and/or the channel bandwidth of 3 MHz is 15, that is, the maximum time-frequency resources supported are 15, and the number of the first RBs is equal to or less than 15.

At S402, a rate matching is performed based on the first RB, and a length of coded bits matching the first RB is determined.

At S403, a modulation is performed on the coded bit matching the first RB; and resource mapping is performed on modulated symbol data based on the first RB and the first subcarrier index, and a transmission position of the symbol data matching the first RB is determined.

At S404, the first SSB is sent to the UE using the first RB.

In other words, the network device performs the rate matching, QPSK modulation, and the resource mapping based on time-frequency resources matching the system bandwidth/terminal bandwidth (for example, a 3 MHz system bandwidth, 15 RBs occupied by the SSB in the frequency domain).

Specifically, the rate matching is performed based on the time-frequency resource structure of the SSB occupying 20 RBs or a time-frequency resource structure of the PBCH in the SSB, outputting a bit length of 594 bits. The QPSK modulation is performed on the 594 coded bits, the resource mapping is performed on the modulated symbol data, and the transmission position of the symbol data is determined, in which the resource mapping is performed based on the resource mapping table of the offset SSB time-frequency structure.

In some embodiments of the disclosure, performing the rate matching based on the first RB includes: for at least two different PBCH transmissions, performing the rate matching using the same coded bit start position.

For example, according to the first RB matching the system bandwidth/terminal bandwidth, taking a system bandwidth/terminal bandwidth of 3 MHz and the quantity of first RBs as 15 as an example, the length of the coded bit matching the transmission resources after the rate matching is 594 bits, while the number of bits after Turbo coding is 512 bits, with 82 bits needing repetition. For at least two different PBCH transmissions, the rate matching is performed using the same coded bit start position, for example, all starting at bit position 0. In one PBCH transmission, bit #0 is positioned as the start position, and the PBCH transmission proceeds from 0 to 512, then from 0 to 82. In other different PBCH transmissions, coded bit #0 is similarly positioned as the start position, and the PBCH transmission proceeds from 0 to 512, then from 0 to 82.

The at least two different PBCH transmissions include: PBCH transmissions corresponding to any two or more SSB indexes within an SSB set in the same SSB period; or PBCH transmissions corresponding to the same SSB index in at least two different SSB periods.

For example, within 80 ms, the PBCH transmissions are repeated over 4 periods. Within the same period, the PBCH transmissions need to send 4 different SSB indexes. For the PBCH transmissions corresponding to two or more SSB indexes within the same period, the same coded bit start position may be used for the rate matching, for example, both the PBCH transmissions corresponding to the first SSB index and the second SSB index use bit #0 as the start position of the coded bits. Alternatively, for the PBCH transmissions corresponding to the same SSB index in the at least two different SSB periods, the same coded bit start position may be used for the rate matching, for example, both the PBCH transmission corresponding to the first SSB index in a first period and the PBCH transmission corresponding to the first SSB index in a third period use bit #0 as the start position of the coded bits.

In some embodiments of the disclosure, performing the rate matching based on the first RB includes: for at least two different PBCH transmissions, performing the rate matching using different coded bit start positions, in which the different coded bit start positions for performing the rate matching depend on a length of coded bits matching the system bandwidth and/or channel bandwidth.

For example, according to the first RB matching the system bandwidth/terminal bandwidth, taking a system bandwidth/terminal bandwidth of 3 MHz and the quantity of first RBs as 15 as an example, the length of the coded bit matching the transmission resources after the rate matching is 594 bits, while the number of bits after Turbo coding is 512 bits. For the at least two different PBCH transmissions, different coded bit start positions are used for the rate matching. In one PBCH transmission, bit #0 is positioned as the start position, and the PBCH transmission proceeds from 0 to 512, then from 0 to 82. In other different PBCH transmissions, coded bit #82 is positioned as the start position, and the PBCH transmission proceeds from 82 to 512, then from 0 to 164.

The at least two different PBCH transmissions include: PBCH transmissions corresponding to any two or more SSB indexes within an SSB set in the same SSB period; or PBCH transmissions corresponding to the same SSB index in at least two different SSB periods.

For example, within 80 ms, the PBCH transmissions are repeated over 4 periods. Within the same period, the PBCH transmissions need to send 4 different SSB indexes. For the PBCH transmissions corresponding to two or more SSB indexes within the same period, the same coded bit start position may be used for the rate matching, for example, the first SSB index uses bit #0 as the start position of the coded bits, and the PBCH transmission corresponding to the second SSB index uses bit #82 as the start position of the coded bits. Alternatively, for the PBCH transmissions corresponding to the same SSB index in the at least two different SSB periods, the same coded bit start position may be used for the rate matching, for example, the PBCH transmission corresponding to the first SSB index in a first period uses bit #0 as the start position of the coded bits, and the PBCH transmission corresponding to the first SSB index in a third period uses bit #82 as the start position of the coded bits.

In some embodiments of the disclosure, the method further includes: for the at least two different PBCH transmissions, sending a configuration signaling of the coded bit start position used for the rate matching of the PBCH transmission to the UE.

The at least two different PBCH transmissions include: PBCH transmissions corresponding to any two or more SSB indexes within an SSB set in the same SSB period; or PBCH transmissions corresponding to the same SSB index in at least two different SSB periods.

That is, for the PBCH transmissions corresponding to any two or more SSB indexes within the SSB set in the same SSB period, or for the PBCH transmissions corresponding to the same SSB index in the at least two different SSB periods, the network device configures or indicates the coded bit start position used for the rate matching of the PBCH transmission for each SSB.

In summary, according to the communication control method provided in the embodiments of the disclosure, the rate matching is performed based on the first RB, and the length of the coded bit matching the first RB is determined. The modulation is performed on the coded bit matching the first RB; and the resource mapping is performed on the modulated symbol data based on the first RB and the first subcarrier index, and the transmission position of the symbol data matching the first RB is determined. The first SSB is sent to the UE using the first RB. This provides an SSB/PBCH transmission method to match a system bandwidth and/or a channel bandwidth of dedicated spectrums, while ensuring transmission performance of the PBCH.

FIG. 7 is a flow chart illustrating a communication control method according to an embodiment of the disclosure. The method is performed by a UE. The UE includes but is not limited to smart terminal devices, cellular phones, wireless devices, handheld devices, mobile units, vehicles, in-vehicle devices, etc., which is not limited in the disclosure.

As shown in FIG. 7, the method may include the following step S501.

At S501, a first SSB matching a system bandwidth and/or a channel bandwidth sent by a network device is received, the first SSB at least including a PBCH.

A quantity of the first RBs is less than a quantity of second RBs, and the second RB are time-frequency resources for transmitting a second SSB.

In the embodiments of the disclosure, the system bandwidth and/or the channel bandwidth may also be available bandwidth resources, which is not limited in the disclosure.

In embodiments of the disclosure, the second RB is used to transmit the second SSB, which is consistent with current protocols. The first RB is used to transmit the first SSB, which matches the system bandwidth and/or the channel bandwidth. That is, the time-frequency resources supported by the system bandwidth or the channel bandwidth in the disclosure are lower than the time-frequency resources for the SSB transmission supported by current NR protocols.

It should be noted that in existing NR systems, an SSB occupies 20 RBs in the frequency domain, in which the PBCH occupies 20 RBs in the frequency domain, and a PSS and a SSS each occupy 127 REs in the frequency domain.

Further, the time-frequency resource of the second SSB is the time-frequency resource supporting the SSB transmission in existing NR protocols R15/16/17. The SSB transmission frequency-domain resource in existing NR protocols occupies 20 RBs, that is, the number of the second RBs is the number of RBs occupied by the second SSB in the frequency domain, or the number of RBs occupied by the PBCH in the second SSB in the frequency domain, i.e., 20 RBs.

In embodiments of the disclosure, the time-frequency resources supported by the system bandwidth or the channel bandwidth are lower than the time-frequency resources occupied by the SSB transmission supported by current protocols. For example, the system bandwidth or the channel bandwidth of some dedicated spectrums is 3 MHz and 2.8 MHz to 3.6 MHz, supporting a number of RBs less than 20.

Further, the time-frequency resource of the first SSB is a time-frequency resource matching the system bandwidth/channel bandwidth. For example, the first RB matches a system bandwidth of 3 MHz. According to LTE regulations for RF channel bandwidth, the number of available RBs for 3 MHz is 15, which does not support the SSB transmission in existing NR systems (occupying 20 RBs in the frequency domain). The number of the first RBs is the number of RBs occupied by the first SSB in the frequency domain, or the number of RBs occupied by the PBCH in the first SSB in the frequency domain, with a maximum of 15 RBs.

In summary, according to the communication control method provided in the embodiments of the disclosure, the first SSB sent by the network device using the first RB matching the system bandwidth and/or the channel bandwidth is received. The first SSB at least includes the PBCH, in which the number of the first RBs is less than the number of second RBs, and the second RB is the time-frequency resource for transmitting the second SSB. This provides an SSB transmission method to match a system bandwidth and/or a channel bandwidth of dedicated spectrums.

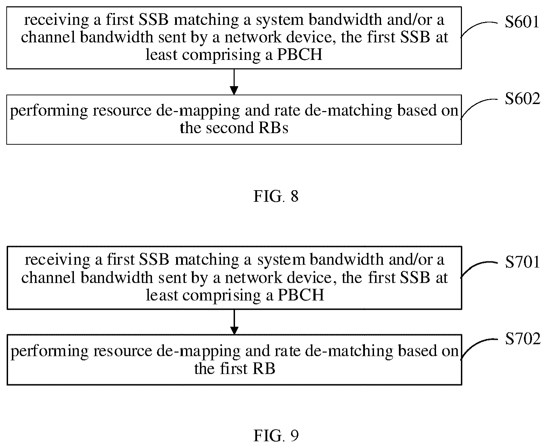

FIG. 8 is a flow chart illustrating a communication control method according to an embodiment of the disclosure. The method is performed by a UE. Based on the embodiments shown in FIG. 7, as shown in FIG. 8, the method may include the following steps S601 to S602.

At S601, a first SSB matching a system bandwidth and/or a channel bandwidth sent by a network device is received, the first SSB at least including a PBCH.

In some embodiments of the disclosure, the method further includes: performing OFDM demodulation on the PBCH; determining a RE index reordering manner of the first SSB based on a protocol agreement; and determining, based on an RE index position of a second SSB and the RE index reordering manner, a transmission position of symbol data where an OFDM demodulation symbol is located and which matches the second RB.

It may be understood that on the network device side, the RE index of the second SSB is reordered to determine a RE index of the first SSB. The UE may determine the RE index reordering manner of the first SSB based on the protocol agreement, and determine, based on the RE index position of the second SSB and the RE index reordering manner of the first SSB, a transmission position of symbol data where the OFDM demodulation symbol is located and which matches the second RB.

In an implementation, before the OFDM demodulation is performed, the method may further include: performing digital filtering on the received PBCH using a filter matching a width of the system bandwidth and/or the channel bandwidth to exclude interference of subcarriers between a current system bandwidth and/or a channel bandwidth network and its adjacent networks. Further, after obtaining the filtered received PBCH and performing the OFDM demodulation, frequency-domain positions matching the terminal channel bandwidth/system bandwidth retain original data unchanged, and other positions are set to zero.

At S602, a resource de-mapping and rate de-matching are performed based on the second RB.

In some embodiments of the disclosure, before performing the resource de-mapping and the rate de-matching based on the second RB, the method further includes: performing resource de-remapping on symbol data on the first RB.

It may be understood that corresponding to step S303 in the embodiment shown in FIG. 4, where the symbol data matching the second RBs is remapped to the first RB, the transmission position of the symbol data changes. The resource de-mapping and the rate de-matching based on the second RB cannot be directly performed, and the resource de-remapping needs to be performed on the symbol data on the first RB. That is, an inverse process of the resource remapping corresponding to the network device side is performed to determine an original resource position where the symbol data is located.

Further, corresponding to the embodiments shown in FIG. 2 and FIG. 4 where the network device performs the rate matching, the QPSK modulation, and the resource mapping based on the second RB, after receiving the first SSB sent by the network device, the UE performs the resource de-mapping and the rate de-matching based on the second RB. That is, the rate de-matching and the resource de-mapping are performed based on the time-frequency resources supporting the SSB transmission in existing NR protocols R15/16/17.

In some embodiments of the disclosure, the method further includes: performing separate decoding or combined decoding for at least two different PBCH transmissions.

For example, for the at least two different PBCH transmissions, content after the rate de-matching of the at least two different PBCH transmissions may be superimposed, and decoding is performed together later; or each received PBCH transmission may be decoded separately.

It should be noted that during an SSB transmission period, repeated PBCH transmissions are performed. For example, within every 80 ms, four repeated PBCH transmissions are performed. The UE performing the combined decoding on two or more PBCH receptions may improve PBCH transmission performance.

In some embodiments of the disclosure, performing the combined decoding for the at least two different PBCH transmissions includes: for the at least two different PBCH transmissions using different PBCH resource remapping patterns, performing the combined decoding in a preset pattern order in an initial access state.

It should be noted that corresponding to the embodiments shown in FIG. 4, where the network device uses different PBCH resource remapping patterns for the at least two different PBCH transmissions, considering that in the initial access state, the UE cannot know which PBCH the currently received PBCH is, blind combined decoding is performed, that is, the combined decoding is performed in the preset pattern order.

For example, for the two PBCH receptions, it is considered to first perform the resource de-mapping and the rate de-matching based on {pattern 1, pattern#2} corresponding to {PBCH#1, PBCH#2} received sequentially, and then perform hybrid automatic repeat request (HARQ) combining. If decoding is unsuccessful, the resource de-mapping and the rate de-matching are performed again based on {pattern#2, pattern#1} corresponding to {PBCH#1, PBCH#2} received sequentially, and then the combined decoding is performed.

It should be noted that if the network device uses two or more remapping patterns for the PBCH transmission, the UE side may consider a blind decoding method matching two or more resource remapping patterns for single PBCH reception attempt decoding.

In some embodiments of the disclosure, performing the combined decoding for the at least two different PBCH transmissions includes: for the at least two different PBCH transmissions using different PBCH resource remapping patterns, performing the combined decoding based on pattern-related information agreed by a protocol or configured by a network device in a non-initial access state.

That is, the UE may learn, based on a protocol-predefined rule or configuration of the network device, the resource remapping pattern associated with each received PBCH , and perform the combined decoding using the resource remapping pattern associated with the received PBCH.

In some embodiments of the disclosure, the method further includes: receiving pattern-related information of different PBCH resource remapping patterns used for the at least two different PBCH transmissions sent by the network device.

It may be understood that corresponding to the embodiments shown in FIG. 4, where the network device configures the pattern-related information of different PBCH resource remapping patterns used for the at least two different PBCH transmissions for the UE, the UE receives the configuration information, and thus may perform the combined decoding on the at least two different PBCH transmissions based on the pattern-related information of the different PBCH resource remapping patterns used for the at least two different PBCH transmissions.

In some embodiments of the disclosure, the method further includes: determining a PBCH resource remapping pattern used for each PBCH transmission based on the pattern-related information and a downlink timing.

That is, based on the downlink timing of the PBCH transmission and the pattern-related information, the UE may determine which PBCH is currently received and the corresponding PBCH resource remapping pattern.

In some embodiments of the disclosure, the at least two different PBCH transmissions include: PBCH transmissions corresponding to any two or more SSB indexes within an SSB set during the same SSB period; or PBCH transmissions corresponding to the same SSB index during at least two different SSB periods.

For example, within 80 ms, the PBCH transmissions are repeated over 4 periods. Within the same period, the PBCH transmissions need to send 4 different SSB indexes. The at least two different PBCH transmissions may refer to the PBCH transmissions corresponding to any 2, 3, or 4 different SSB indexes within the same period, or may refer to the PBCH transmissions corresponding to the same SSB index during any 2, 3, or 4 different periods.

In summary, according to the communication control method provided in the embodiments of the disclosure, the UE receives the first SSB matching the system bandwidth and/or the channel bandwidth sent by the network device, performs the resource de-mapping and the rate de-matching based on the second RB, and performs the separate decoding or the combined decoding for the at least two different PBCH transmissions. This provides an SSB/PBCH transmission method to match a system bandwidth and/or a channel bandwidth of dedicated spectrums, while ensuring transmission performance of the PBCH.

FIG. 9 is a flow chart illustrating a communication control method according to an embodiment of the disclosure. The method is performed by a UE. Based on the embodiments shown in FIG. 7, as shown in FIG. 9, the method may include the following steps S701 to S702.

At S701, a first SSB matching a system bandwidth and/or a channel bandwidth sent by a network device is received, the first SSB at least including a PBCH.

In some embodiments of the disclosure, the method further includes: performing OFDM demodulation on the PBCH; determining a RE index reordering manner of the first SSB based on a protocol agreement; and determining, based on an RE index position of a second SSB and the RE index reordering manner, a transmission position of symbol data where an OFDM demodulation symbol is located and which matches the second RB.

It may be understood that on the network device side, the RE index of the second SSB is reordered to determine a RE index of the first SSB. The UE may determine the RE index reordering manner of the first SSB based on the protocol agreement, and determine, based on the RE index position of the second SSB and the RE index reordering manner of the first SSB, a transmission position of symbol data where the OFDM demodulation symbol is located and which matches the second RB.

In an implementation, before the OFDM demodulation is performed, the method may further include: performing digital filtering on the received PBCH using a filter matching a width of the system bandwidth and/or the channel bandwidth to exclude interference of subcarriers between a current system bandwidth and/or a channel bandwidth network and its adjacent networks. Further, after obtaining the filtered received PBCH and performing the OFDM demodulation, frequency-domain positions matching the terminal channel bandwidth/system bandwidth retain original data unchanged, and other positions are set to zero.

At S702, a resource de-mapping and rate de-matching are performed based on the first RB.

It may be understood that corresponding to the embodiments shown in FIG. 6, where the network device performs the rate matching, the QPSK modulation, and the resource mapping based on the first RB, after receiving the first SSB sent by the network device, the UE performs the resource de-mapping and the rate de-matching based on the first RB. That is, the rate de-matching and the resource de-mapping are performed based on the time-frequency resources matching the system bandwidth and/or the channel bandwidth.

In some embodiments of the disclosure, the method further includes: performing separate decoding or combined decoding for at least two different PBCH transmissions.

For example, for the at least two different PBCH transmissions, content after the rate de-matching of the at least two different PBCH transmissions may be superimposed, and decoding is performed together later; or each received PBCH transmission may be decoded separately.

It should be noted that during an SSB transmission period, repeated PBCH transmissions are performed. For example, within every 80 ms, four repeated PBCH transmissions are performed. The UE performing the combined decoding on two or more PBCH receptions may improve PBCH transmission performance.

In some embodiments of the disclosure, performing the combined decoding for the at least two different PBCH transmissions includes: for the at least two different PBCH transmissions using different coded bit start position cyclic orders, performing the combined decoding in a preset coded bit start position cyclic order in an initial access state.

It should be noted that corresponding to the embodiments shown in FIG. 6, where the network device uses different coded bit start positions for the rate matching for the at least two different PBCH transmissions, considering that in the initial access state, the UE cannot know which PBCH the currently received PBCH is, blind combined decoding is performed, that is, the combined decoding is performed in the preset coded bit start position cyclic order.

For example, for a PBCH#1 and a PBCH#2, it is first assumed that the coded bit start position cyclic order is A, B for the combined decoding; if the attempt is unsuccessful, then the coded bit start position cyclic order is swapped to try again for the combined decoding.

It should be noted that if the network device uses two or more remapping patterns for the PBCH transmission, the UE side may consider a blind decoding method matching two or more resource remapping patterns for single PBCH reception attempt decoding.

In some embodiments of the disclosure, performing the combined decoding for the at least two different PBCH transmissions includes: for the at least two different PBCH transmissions using different coded bit start position cyclic orders, performing the combined decoding based on a coded bit start position cyclic order agreed by the protocol or configured by the network device in a non-initial access state.

That is, the UE may learn, based on a protocol-predefined rule or configuration of the network device, the coded bit start position cyclic order associated with each received PBCH, and perform the combined decoding using the coded bit start position cyclic order associated with the received PBCH.

In some embodiments of the disclosure, the method further includes: receiving pattern-related information of different coded bit start position cyclic orders used for the at least two different PBCH transmissions sent by the network device.

It may be understood that corresponding to the embodiments shown in FIG. 6, where the network device sends configuration signaling of different coded bit start position cyclic orders used for the at least two different PBCH transmissions to the UE, the UE receives the configuration signaling, and thus may perform the combined decoding on the at least two different PBCH transmissions based on the different coded bit start position cyclic orders used for the at least two different PBCH transmissions.

In some embodiments of the disclosure, the method further includes: determining a coded bit start position used for each rate matching of PBCH based on the coded bit start position cyclic order and a downlink timing.

That is, based on the downlink timing of the PBCH transmission and the coded bit start position cyclic order, the UE may determine which PBCH is currently received and the corresponding coded bit start position cyclic order.

In some embodiments of the disclosure, the at least two different PBCH transmissions include: PBCH transmissions corresponding to any two or more SSB indexes within an SSB set during the same SSB period; or PBCH transmissions corresponding to the same SSB index during at least two different SSB periods.

For example, within 80 ms, the PBCH transmissions are repeated over 4 periods. Within the same period, the PBCH transmissions need to send 4 different SSB indexes. The at least two different PBCH transmissions may refer to the PBCH transmissions corresponding to any 2, 3, or 4 different SSB indexes within the same period, or may refer to the PBCH transmissions corresponding to the same SSB index during any 2, 3, or 4 different periods.

In summary, according to the communication control method provided in the embodiments of the disclosure, the UE receives the first SSB matching the system bandwidth and/or the channel bandwidth sent by the network device, performs the resource de-mapping and the rate de-matching based on the first RB, and performs the separate decoding or the combined decoding for the at least two different PBCH transmissions. This provides an SSB/PBCH transmission method to match a system bandwidth and/or a channel bandwidth of dedicated spectrums, while ensuring transmission performance of the PBCH.

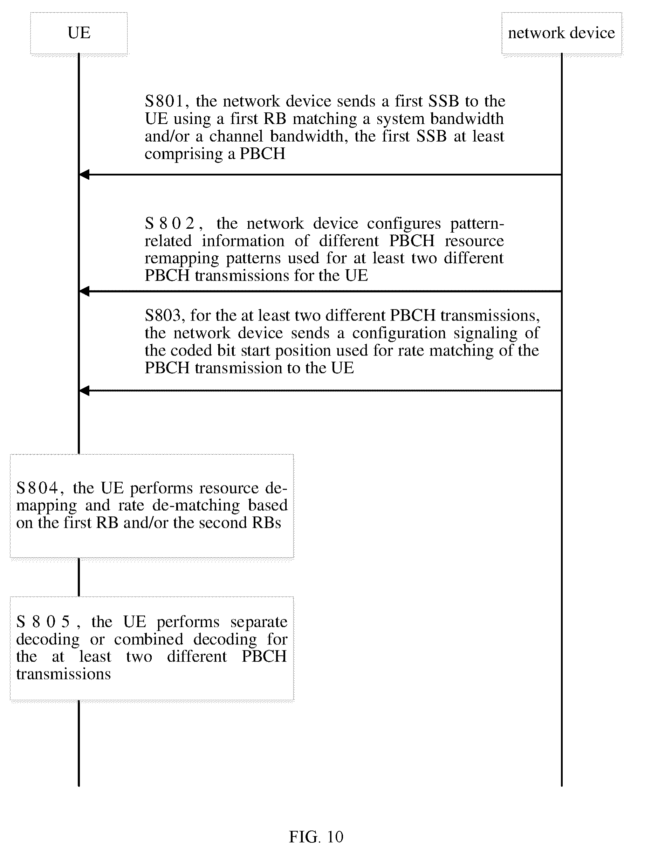

FIG. 10 is an interaction diagram illustrating a communication control method according to an embodiment of the disclosure. As shown in FIG. 10, the embodiment involves data/signaling interaction between a network device and a UE when performing the communication control method. Based on the embodiments shown in FIG. 1 to FIG. 9, the method includes the following steps S801 to S805.

At S801, the network device sends a first SSB to the UE through at least one RB matching a system bandwidth and/or a channel bandwidth, the first SSB at least including a PBCH.

At S802, the network device configures pattern-related information of different PBCH resource remapping patterns used for at least two different PBCH transmissions for the UE.

At S803, for the at least two different PBCH transmissions, the network device sends a configuration signaling of the coded bit start position used for rate matching of the PBCH transmission to the UE.

At S804, the UE performs resource de-mapping and rate de-matching based on the first RB and/or the second RB.

At S805, the UE performs separate decoding or combined decoding for the at least two different PBCH transmissions.

It should be noted that steps S802, S803, S804, and S805 are optional.

When performing S802, the UE performs the resource de-mapping and the rate de-matching based on the second RB. Step S805 includes: for the at least two different PBCH transmissions using different PBCH resource remapping patterns, in an initial access state, the UE performs the combined decoding in the preset pattern order; in a non-initial access state, the UE performs the combined decoding based on pattern-related information agreed by a protocol or configured by the network device.

When performing S803, the UE performs the resource de-mapping and the rate de-matching based on the first RB. Step S805 includes: for the at least two different PBCH transmissions using different coded bit start position cyclic orders, in an initial access state, the UE performs the combined decoding in the preset coded bit start position cyclic order; in a non-initial access state, the UE performs the combined decoding based on the coded bit start position cyclic order agreed by the protocol or configured by the network device.

The principles of steps S801 to S804 are the same as those described in FIG. 1 to FIG. 9. For related descriptions, reference may be made to FIG. 1 to FIG. 6, which are not repeated here.

In summary, according to the communication control method provided in the embodiments of the disclosure, the network device sends the first SSB to the UE through at least one RB matching the system bandwidth and/or the channel bandwidth. The first SSB at least includes the PBCH. For the at least two different PBCH transmissions, the UE performs the separate decoding or the combined decoding. This provides an SSB/PBCH transmission method to match a system bandwidth and/or a channel bandwidth of dedicated spectrums, while ensuring transmission performance of the PBCH.

In the above embodiments provided in the disclosure, description is made to the method according to embodiments of the disclosure from the perspectives of the network device and the UE respectively. In order to realize each of the functions in the method according to the above embodiments of the disclosure, the network device and the UE may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the communication control method provided in the embodiments described above, the disclosure also provides a communication control apparatus. Since the communication control apparatus provided in embodiments of the disclosure corresponds to the methods provided in the embodiments described above, the implementation of the communication control method is also applicable to the communication control apparatus provided in the following embodiments, which will not be described in detail in the following embodiments.

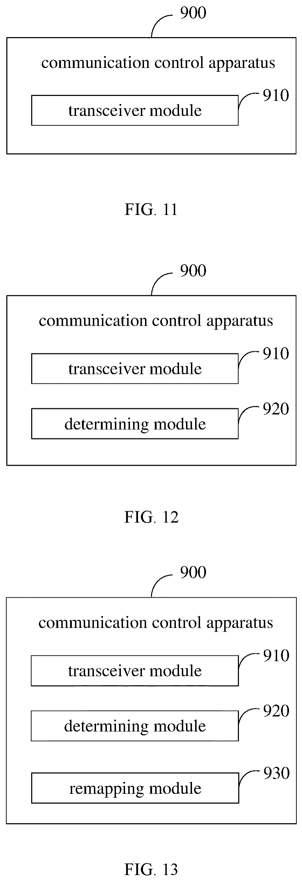

FIG. 11 is a block diagram illustrating an apparatus 900 for communication control according to an embodiment of the disclosure. The apparatus 900 may be configured in a network device.

As shown in FIG. 11, the apparatus 900 may include a transceiver module 910.

The transceiver module is configured to send the first SSB to a UE through at least one RB matching a system bandwidth and/or a channel bandwidth, the first SSB at least including a PBCH, in which a quantity of the first RBs is less than a quantity of second RBs, the second RB are time-frequency resources for transmitting a second SSB.

According to the communication control apparatus in the disclosure, the network device sends the first SSB to the UE through at least one RB matching the system bandwidth and/or the channel bandwidth. The first SSB at least includes the PBCH, in which the number of the first RBs is less than the number of second RBs, and the second RB is the time-frequency resource for transmitting the second SSB. This provides an SSB/PBCH transmission method to match a system bandwidth and/or a channel bandwidth of dedicated spectrums, while ensuring transmission performance of the PBCH.

In some embodiments of the disclosure, as shown in FIG. 12, the apparatus 900 further includes a determining module 920, configured to determine a first subcarrier index of the first RB where the first SSB is located, in which the first subcarrier index is an offset relative to a subcarrier 0 in the first RB.

In some embodiments of the disclosure, the determining module 920 is further configured to perform rate matching based on the second RB, and determine a length of coded bits matching the second RB; and modulate the coded bits matching the second RBs; and perform resource mapping on the modulated symbol data based on the second RBs, to determine a transmission position of symbol data matching the second RBs.

In some embodiments of the disclosure, the transceiver module 910 is specifically configured to select a transmission position of symbols corresponding to the quantity of first RBs at an SSB center frequency point from a transmission position of symbols matching the second RBs to send the first SSB to the UE.

In some embodiments of the disclosure, the transceiver module 910 is specifically configured to retain symbol data carried on each subcarrier of the first RB at the SSB center frequency point, and set symbol data beyond each subcarrier of the first RB to zero; and perform OFDM modulation based on the first subcarrier index of the first RB at the SSB center frequency point and corresponding symbol data; and send the first SSB to the UE.

In some embodiments of the disclosure, the transceiver module 910 is specifically configured to determine second subcarrier indexes of the second RBs at the SSB center frequency point; replace the second subcarrier indexes with the first subcarrier index; and perform an OFDM modulation based on the first subcarrier index of the first RB at the SSB center frequency point and corresponding symbol data to send the first SSB to the UE.

In some embodiments of the disclosure, as shown in FIG. 13, the apparatus 900 further includes a remapping module 930, configured to perform the resource mapping on the modulated symbol data based on the second RBs, and determine the transmission position of the symbol data matching the second RBs. The remapping module 930 is configured to remap the symbol data matching the second RBs to the first RB.

In some embodiments of the disclosure, the remapping module 930 is specifically configured to, for at least two different PBCH transmissions, remap the symbol data matching the second RBs to the first RB using different PBCH resource remapping patterns.

In some embodiments of the disclosure, the transceiver module 910 is further configured to configure pattern-related information of the different PBCH resource remapping patterns used for the at least two different PBCH transmissions for the UE.

In some embodiments of the disclosure, the transceiver module 910 is specifically configured to retain symbol data carried on each subcarrier of the remapped first RB at the SSB center frequency point, and set symbol data beyond each subcarrier of the remapped first RB to zero; and perform OFDM modulation according to the first subcarrier index of the first RB at the SSB center frequency point and corresponding symbol data; and send the first SSB to the UE.

In some embodiments of the disclosure, the transceiver module 910 is specifically configured to determine second subcarrier indexes of the second RBs at the SSB center frequency point; replace the second subcarrier index with the first subcarrier index; and performing OFDM modulation based on the first subcarrier index of the first RB at the SSB center frequency point and corresponding remapped symbol data; and send the first SSB to the UE.

In some embodiments of the disclosure, the determining module 920 is further configured to perform rate matching based on the first RB, and determine a length of coded bits matching the first RB; modulate the coded bit matching the first RB; and perform resource mapping on modulated symbol data based on the first RB and the first subcarrier index, and determine a transmission position of the symbol data matching the first RB.

In some embodiments of the disclosure, performing the rate matching based on the first RB includes: for at least two different PBCH transmissions, performing the rate matching using the same coded bit start position.

In some embodiments of the disclosure, performing the rate matching based on the first RB includes: for at least two different PBCH transmissions, performing the rate matching using different coded bit start positions, in which the different coded bit start positions for performing the rate matching depend on a length of coded bits matching the system bandwidth and/or channel bandwidth.

In some embodiments of the disclosure, the transceiver module 910 is further configured to, for the at least two different PBCH transmissions, send a configuration signaling of the coded bit start position used for the rate matching of the PBCH transmission to the UE.

In some embodiments of the disclosure, the at least two different PBCH transmissions include: PBCH transmissions corresponding to any two or more SSB indexes within an SSB set in the same SSB period; or PBCH transmissions corresponding to the same SSB index in at least two different SSB periods.

In some embodiments of the disclosure, the determining module 920 is further configured to determine the first RB, in which the quantity of the at least one first RB is equal to or less than a quantity of RBs corresponding to maximum time-frequency resources supported by the system bandwidth and/or channel bandwidth.

In summary, according to the communication control apparatus in the disclosure, the network device sends the first SSB to the UE through at least one RB matching the system bandwidth and/or the channel bandwidth. The first SSB at least includes the PBCH, in which the number of the first RBs is less than the number of second RBs, and the second RB is the time-frequency resource for transmitting the second SSB. This provides an SSB/PBCH transmission method to match a system bandwidth and/or a channel bandwidth of dedicated spectrums, while ensuring transmission performance of the PBCH.

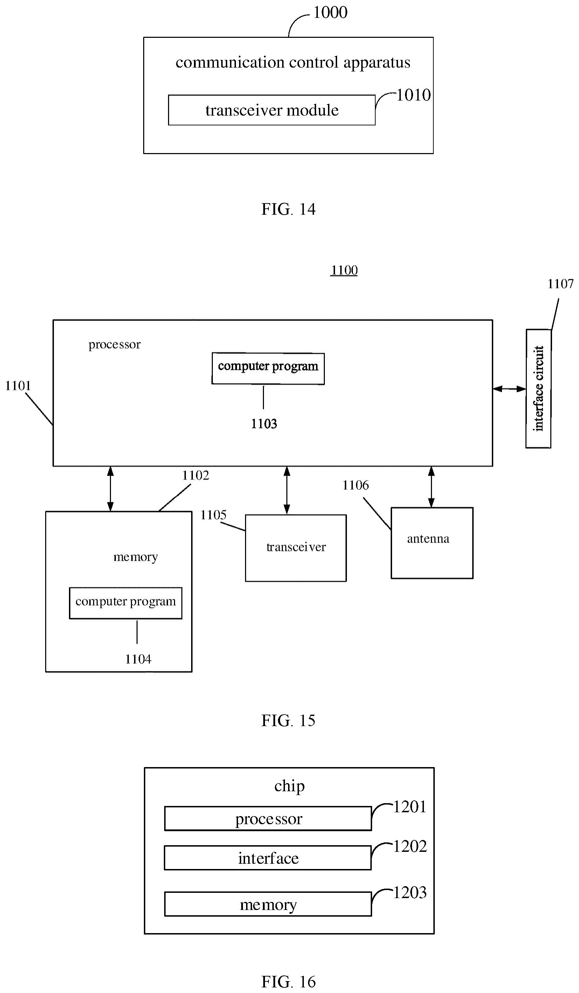

FIG. 14 is a block diagram illustrating an apparatus 1000 for communication control according to an embodiment of the disclosure. The apparatus 1000 may be configured in a UE.

As shown in FIG. 14, the apparatus 1000 may include a transceiver module 1010.

The transceiver module 1010 is configured to receive the first SSB matching a system bandwidth and/or a channel bandwidth sent by a network device, the first SSB at least including a PBCH, in which a quantity of the first RBs is less than a quantity of second RBs, the second RB are time-frequency resources for transmitting a second SSB.

In summary, according to the communication control apparatus in the disclosure, the first SSB sent by the network device using the first RB matching the system bandwidth and/or the channel bandwidth is received. The first SSB at least includes the PBCH, in which the number of the first RBs is less than the number of second RBs, and the second RB is the time-frequency resource for transmitting the second SSB. This provides an SSB transmission method to match a system bandwidth and/or a channel bandwidth of dedicated spectrums.

In some embodiments of the disclosure, the method further includes: performing OFDM demodulation on the PBCH; determining a RE index reordering manner of the first SSB based on a protocol agreement; and determining, based on an RE index position of a second SSB and the RE index reordering manner, a transmission position of symbol data where an OFDM demodulation symbol is located and which matches the second RB.

In some embodiments of the disclosure, the method further includes: performing resource de-mapping and rate de-matching based on the second RB.

In some embodiments of the disclosure, the method further includes: performing resource de-mapping and rate de-matching based on the first RB.

In some embodiments of the disclosure, the method further includes: performing separate decoding or combined decoding for at least two different PBCH transmissions.

In some embodiments of the disclosure, performing the combined decoding for the at least two different PBCH transmissions includes: for the at least two different PBCH transmissions using different PBCH resource remapping patterns, performing the combined decoding in a preset pattern order and/or a preset coded bit start position cyclic order in an initial access state.

In some embodiments of the disclosure, performing the combined decoding for the at least two different PBCH transmissions includes: for the at least two different PBCH transmissions using different PBCH resource remapping patterns, performing the combined decoding based on pattern-related information agreed by a protocol or configured by a network device and/or a coded bit start position cyclic order agreed by the protocol or configured by the network device in a non-initial access state.

In some embodiments of the disclosure, the transceiver module 1010 is configured to receive pattern-related information of different PBCH resource remapping patterns and/or different coded bit start position cyclic orders used for the at least two different PBCH transmissions sent by the network device.

In some embodiments of the disclosure, the method further includes: determining a PBCH resource remapping pattern used for each PBCH transmission based on the pattern-related information and a downlink timing.

In some embodiments of the disclosure, the method further includes: determining a coded bit start position used for each rate matching of PBCH based on the coded bit start position cyclic order and a downlink timing.

In some embodiments of the disclosure, the at least two different PBCH transmissions include: PBCH transmissions corresponding to any two or more SSB indexes in an SSB set during the same SSB period; or PBCH transmissions corresponding to the same SSB index during at least two different SSB periods.

In some embodiments of the disclosure, before performing the resource de-mapping and rate de-matching based on the second RB, the method further includes: performing resource de-remapping on symbol data on the first RB.

In summary, according to the communication control apparatus in the disclosure, the UE receives the first SSB matching the system bandwidth and/or the channel bandwidth sent by the network device, the first SSB at least includes the PBCH, in which the number of the first RBs is less than the number of second RBs, and the second RB is the time-frequency resource for transmitting the second SSB, performs the resource de-mapping and the rate de-matching based on the first RB and/or the second RB, and performs the separate decoding or the combined decoding for the at least two different PBCH transmissions. This provides an SSB/PBCH transmission method to match a system bandwidth and/or a channel bandwidth of dedicated spectrums, while ensuring transmission performance of the PBCH.

Embodiments of the disclosure also provide a communication system, applied to a core network. The communication system may be a LTE system, a 5G mobile communication system, a 5G NR system, or other future new mobile communication systems.

The communication system includes: a network device and a UE, in which the network device sends the first SSB to the UE through at least one RB matching a system bandwidth and/or a channel bandwidth, the first SSB at least including a PBCH.

The network device is configured to perform the methods in embodiments shown in FIG. 1, FIG. 2, FIG. 4, and FIG. 6; the UE is configured to perform the methods in embodiments shown in FIG. 7, FIG. 8, and FIG. 9.

In summary, according to the communication control method provided in the embodiments of the disclosure, the network device sends the first SSB to the UE through at least one RB matching the system bandwidth and/or the channel bandwidth. The first SSB at least includes the PBCH. This provides an SSB/PBCH transmission method to match a system bandwidth and/or a channel bandwidth of dedicated spectrums, while ensuring transmission performance of the PBCH.

Referring to FIG. 15, FIG. 15 is a block diagram illustrating a communication device 1100 according to an embodiment of the disclosure. The communication device 1100 may be a network device, a UE, a chip, a system on chip or a processor that supports the network device to implement the method, or a chip, a system on chip or a processor that supports the UE to implement the method. The communication device may be configured to implement the method described in the method embodiments, which may refer to descriptions in the method embodiments.

The communication device 1100 may include one or more processors 1101. The processor 1101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a UE, a UE chip, a DU or CU, etc.), to execute a computer program, and process data of the computer program.

Optionally, the communication device 1100 may further include one or more memories 1102 with a computer program 1104 stored. The processor 1101 executes the computer program 1104 so that the communication device 1100 performs the method as described in the above method embodiments. Optionally, the memory 1102 may further store data. The communication device 1101 and the memory 1102 may be independently configured or integrated together.

Optionally, the communication device 1100 may further include a transceiver 1105 and an antenna 1106. The transceiver 1105 may be referred to as a transceiving unit, a transceiver or a transceiving circuit, which may be configured to achieve a transceiving function. The transceiver 1105 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device 1100 may further include one or more interface circuits 1107. The interface circuit 1107 is configured to receive code instructions and transmit the code instructions to the processor 1101. The processor 1101 runs the code instructions so that the communication device 1100 performs the method according to the above method embodiment.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may be stored with a computer program 1103. The computer program 1103 is running on the processor 1101 so that the communication device 1100 performs the method as described in the above method embodiments. The computer program 1103 may be solidified in the processor 1101, in which case the processor 1101 may be implemented by hardware.

In an implementation, the communication device 1100 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a UE, but the scope of the communication device described in the disclosure is not limited, and a structure of the communication device may not be limited in FIG. 10. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.;
(6) others, and so forth.

In the case that the communication device may be a chip or a system on chip, reference may be made to the schematic structural diagram of a chip in FIG. 16. The chip shown in FIG. 16 includes a processor 1201 and an interface 1202. The number of processors 1201 may be one or more, and the number of interfaces 1202 may be more than one.

Optionally, the chip further includes a memory 1203, configured to save necessary computer program and data.

Those skilled in the related art may understand that various illustrative logical blocks and steps listed in embodiments of the disclosure may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of the embodiments of the disclosure.

A readable storage medium with instructions stored is further provided in the disclosure. When the instructions are executed by a computer, steps in the any one method embodiment are implemented.

A computer program product is further provided in the disclosure. The computer program product implements the functions of any one of the above method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of the embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used in the disclosure, the terms "machine-readable medium" and "computer-readable medium" refer to any computer program product, device, and/or apparatus (e.g., disk, optical disk, memory, programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to a programmable processor.

The system and technology described in the disclosure may be implemented in a computing system that includes backend components (e.g., as a data server), or in a computing system that includes middleware components (e.g., an application server), or in a computing system that includes frontend components (e.g., a user computer with a graphical user interface or web browser, through which a user can interact with the system and technology described herein), or in any combination of backend components, middleware components, or frontend components. The components of the system can be interconnected via any form or medium of digital data communication (e.g., communication networks). Examples of communication networks include local area networks (LAN), wide area networks (WAN), and the internet.

A computer system may include both clients and servers. The client and server are typically located remotely from each other and usually interact through a communication network. The client-server relationship is established by running computer programs on respective computers that have a client-server relationship with each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited in the disclosure.

In addition, it should be understood that various embodiments of the disclosure may be implemented individually or in conjunction with other embodiments as permitted by the solution.

A person of ordinary skill in the art may be aware that units and algorithm steps of the examples described in connection with the embodiments disclosed in the disclosure may be implemented by electronic hardware, or a combination of computer software and electronic hardware. Whether the functions are performed by hardware or software depends on specific applications and design constraint conditions of the technical solutions. Those skilled in the art may use different methods to implement the described functions for each specific application, but it should not be considered that the implementation goes beyond the scope of the disclosure.

Those skilled in the art may clearly understand that, for the convenience and brevity of description, for the described system, apparatus, and specific working process of the unit reference may be made to a corresponding process in the above method embodiments, and details are not described here again.

The above are merely specific embodiments of the disclosure, but the scope of protection of the disclosure is not limited thereto, and any person skilled in the art may easily conceive of changing or replacing within the technical scope disclosed in the disclosure and should be covered within the scope of the disclosure. Therefore, the scope of the disclosure shall be subject to the scope of the claims.

## Claims

1. A communication control method, performed by a network device, comprising:
sending a first synchronization signal/physical broadcast channel (PBCH) block (SSB) to a user equipment (UE) through at least one first resource block (RB) matching a system bandwidth and/or a channel bandwidth, the first SSB at least comprising a PBCH,
wherein a quantity of the at least one first RB is less than a quantity of second RBs, and the second RBs are time-frequency resources for transmitting a second SSB.

2. The method according to claim 1, further comprising:
determining a first subcarrier index of the first RB where the first SSB is located, wherein the first subcarrier index is an offset relative to a subcarrier 0 in the first RB.

3. The method according to claim 1 or 2, further comprising:
performing a rate matching based on the second RBs, and determining a length of coded bits matching the second RBs; and
modulating the coded bits matching the second RBs, and performing a resource mapping on modulated symbol data based on the second RBs to determine a transmission position of symbol data matching the second RBs.

4. The method according to claim 3, wherein sending the first SSB to the UE through the first RB matching the system bandwidth and/or the channel bandwidth comprises:
selecting a transmission position of symbols corresponding to the quantity of first RBs at an SSB center frequency point, from transmission positions of symbols matching the second RBs to send the first SSB to the UE.

5. The method according to claim 4, wherein sending the first SSB to the UE through the first RB matching the system bandwidth and/or the channel bandwidth comprises:
retaining symbol data carried on each subcarrier of the first RB at the SSB center frequency point, and setting symbol data beyond each subcarrier of the first RB to zero; and
performing an orthogonal frequency division multiplexing (OFDM) modulation based on the first subcarrier index of the first RB at the SSB center frequency point and corresponding symbol data to send the first SSB to the UE.

6. The method according to claim 4, wherein sending the first SSB to the UE through the first RB matching the system bandwidth and/or the channel bandwidth comprises:
determining second subcarrier indexes of the second RBs at the SSB center frequency point;
replacing the second subcarrier indexes with the first subcarrier index; and
performing an OFDM modulation based on the first subcarrier index of the first RB at the SSB center frequency point and corresponding symbol data to send the first SSB to the UE.

7. The method according to any one of claims 3 to 6, wherein after performing the resource mapping on the modulated symbol data based on the second RBs to determine the transmission position of the symbol data matching the second RBs, the method further comprises:
remapping the symbol data matching the second RBs to the first RB.

8. The method according to claim 7, wherein remapping the symbol data matching the second RBs to the first RB comprises:
for at least two different PBCH transmissions, remapping the symbol data matching the second RBs to the first RB using different PBCH resource remapping patterns.

9. The method according to claim 7 or 8, further comprising:
configuring pattern-related information of the different PBCH resource remapping patterns used for the at least two different PBCH transmissions for the UE.

10. The method according to any one of claims 7 to 9, wherein sending the first SSB to the UE through the first RB matching the system bandwidth and/or the channel bandwidth comprises:
retaining symbol data carried on each subcarrier of the remapped first RB at the SSB center frequency point, and setting symbol data beyond each subcarrier of the remapped first RB to zero; and
performing OFDM modulation according to the first subcarrier index of the first RB at the SSB center frequency point and corresponding symbol data to send the first SSB to the UE.

11. The method according to any one of claims 7 to 9, wherein sending the first SSB to the UE through the first RB matching the system bandwidth and/or the channel bandwidth comprises:
determining second subcarrier indexes of the second RBs at the SSB center frequency point;
replacing the second subcarrier index with the first subcarrier index; and
performing an OFDM modulation based on the first subcarrier index of the first RB at the SSB center frequency point and corresponding remapped symbol data to send the first SSB to the UE.

12. The method according to claim 2, further comprising:
performing a rate matching based on the first RB to determine a length of coded bits matching the first RB;
modulating the coded bits matching the first RB, and performing a resource mapping on modulated symbol data based on the first RB and the first subcarrier index to determine a transmission position of the symbol data matching the first RB.

13. The method according to claim 11, wherein performing the rate matching based on the first RB comprises:
for at least two different PBCH transmissions, performing the rate matching using the same coded bit start position.

14. The method according to claim 12, wherein performing the rate matching based on the first RB comprises:
for at least two different PBCH transmissions, performing the rate matching using different coded bit start positions,
wherein the different coded bit start positions for performing the rate matching depend on a length of coded bits matching the system bandwidth and/or channel bandwidth.

15. The method according to claim 13 or 14, further comprising:
for the at least two different PBCH transmissions, sending a configuration signaling of the coded bit start position used for the rate matching of the PBCH transmission to the UE.

16. The method according to any one of claims 10 to 11 and 13 to 15, wherein the at least two different PBCH transmissions comprise:
PBCH transmissions corresponding to any two or more SSB indexes within an SSB set in the same SSB period; or
PBCH transmissions corresponding to the same SSB index in at least two different SSB periods.

17. The method according to any one of claims 1 to 16, further comprising:
determining the first RB, wherein the quantity of the at least one first RB is equal to or less than a quantity of RBs corresponding to maximum time-frequency resources supported by the system bandwidth and/or channel bandwidth.

18. A communication control method, performed by a user equipment (UE), comprising:
receiving a first synchronization signal/physical broadcast channel (PBCH) block (SSB) through at least one first resource block (RB) through at least one first resource block (RB) matching a system bandwidth and/or a channel bandwidth sent by a network device, the first SSB at least comprising a PBCH,
wherein a quantity of the first RBs is less than a quantity of second RBs, and the second RB are time-frequency resources for transmitting a second SSB.

19. The method according to claim 18, further comprising:
performing an OFDM demodulation on the PBCH; and
determining a resource element (RE) index reordering manner of the first SSB based on a protocol agreement; and determining, based on an RE index position of a second SSB and the RE index reordering manner, a transmission position of symbol data where an OFDM demodulation symbol is located and which matches the second RBs.

20. The method according to claim 18 or 19, further comprising:
performing a resource de-mapping and a rate de-matching based on the second RBs.

21. The method according to claim 18 or 19, further comprising:
performing a resource de-mapping and a rate de-matching based on the first RB.

22. The method according to any one of claims 18 to 21, further comprising:
performing a separate decoding or a combined decoding for at least two different PBCH transmissions.

23. The method according to claim 22, wherein performing the combined decoding for the at least two different PBCH transmissions comprises:
for the at least two different PBCH transmissions using different PBCH resource remapping patterns, performing the combined decoding in a preset pattern order and/or a preset coded bit start position cyclic order in an initial access state.

24. The method according to claim 22, wherein performing the combined decoding for the at least two different PBCH transmissions comprises:
for the at least two different PBCH transmissions using different PBCH resource remapping patterns, performing the combined decoding based on pattern-related information agreed by a protocol or configured by a network device and/or a coded bit start position cyclic order agreed by the protocol or configured by the network device in a non-initial access state.

25. The method according to claim 24, further comprising:
receiving pattern-related information of different PBCH resource remapping patterns and/or different coded bit start position cyclic orders used for the at least two different PBCH transmissions sent by the network device.

26. The method according to any one of claims 23 to 25, further comprising:
determining a PBCH resource remapping pattern used for each PBCH transmission based on the pattern-related information and a downlink timing.

27. The method according to any one of claims 23 to 25, further comprising:
determining a coded bit start position used for each rate matching of PBCH based on the coded bit start position cyclic order and a downlink timing.

28. The method according to any one of claims 22 to 27, wherein the at least two different PBCH transmissions comprise:
PBCH transmissions corresponding to any two or more SSB indexes in an SSB set during the same SSB period; or
PBCH transmissions corresponding to the same SSB index during at least two different SSB periods.

29. The method according to any one of claims 18 to 28, before performing the resource de-mapping and rate de-matching based on the second RB, the method further comprises:
performing resource de-remapping on symbol data on the first RB.

30. A communication control apparatus, configured in a network device, comprising a transceiver module, wherein the transceiver module is configured to:
send a first SSB to a UE through at least one first RB matching a system bandwidth and/or a channel bandwidth, the first SSB at least comprising a PBCH,
wherein a quantity of the first RBs is less than a quantity of second RBs, the second RB are time-frequency resources for transmitting a second SSB.

31. A communication control apparatus, configured in a UE, comprising a transceiver module, wherein the transceiver module is configured to:
receive a first SSB matching a system bandwidth and/or a channel bandwidth sent by a network device, the first SSB at least comprising a PBCH,
wherein a quantity of the first RBs is less than a quantity of second RBs, the second RB are time-frequency resources for transmitting a second SSB.

32. A communication device, comprising: a transceiver; a memory; a processor connected to the transceiver and the memory, configured to control wireless signal transmission and reception of the transceiver by executing computer-executable instructions stored in the memory, and implement the method according to any one of claims 1 to 29.

33. A computer storage medium, storing computer-executable instructions which, when executed by a processor, implement the method according to any one of claims 1 to 29.

34. A communication system, comprising:
a network device and a UE, wherein
the network device is configured to perform the method according to any one of claims 1 to 17; and
the UE is configured to perform the method according to any one of claims 18 to 29.
